# EUROPEAN PATENT APPLICATION

(11) **EP 4 608 058 A1**
(43) Date of publication of application: **27.08.2025**
(21) Application number: 23892870.9
(22) Date of filing: 20.01.2023
(51) Int. Cl.: H04W 76/19

(54) **METHOD AND APPARATUS FOR ESTABLISHING CALL**

(30) Priority: 22.11.2022 CN 202211468049
(71) Applicant: Honor Device Co., Ltd., Shenzhen, Guangdong 518040 (CN)
(72) Inventor: DAI, Yingdi, Shenzhen, Guangdong 518040 (CN); LI, Haibo, Shenzhen, Guangdong 518040 (CN)
(74) Representative: Gill Jennings & Every LLP
(86) International application number: PCT/CN2023/073296
(87) International publication number: WO 2024/108759

(57) **Abstract**

This application provides a call establishment method and apparatus, including: transmitting a first message to a first network device through a first communication link, where the first message is used for requesting to establish a first call; retransmitting the first message if an acknowledgement message of the first message is not received; performing a reset operation in a case that the retransmission of the first message meets a first preset condition and the acknowledgement message of the first message is not received when the first preset condition is met, to establish a second communication link between a terminal and the first network device; transmitting a second message to the first network device through the second communication link, where the second message is used for requesting to establish the first call; retransmitting the second message if an acknowledgment message of the second message is not received; and performing a domain switching operation if the retransmission of the second message meets a second preset condition and the terminal does not receive the acknowledgment message of the second message when the second preset condition is met, to perform switching from a first domain in which the terminal is currently located to a second domain and to establish the first call in the second domain.

## Description

This application claims priority to Chinese Patent Application No. 202211468049.0, entitled "CALL ESTABLISHMENT METHOD AND APPARATUS" and filed with the China National Intellectual Property Administration on November 22, 2022, which is incorporated herein by reference in its entirety.

### TECHNICAL FIELD

This application relates to the field of communication technologies, and in particular, to a call establishment method and apparatus.

### BACKGROUND

In a call establishment process, a terminal may establish a communication link with a network device, and the terminal transmits data to the network device on the communication link through a transmission control protocol (Transmission Control Protocol, TCP) message or a user datagram protocol (User Datagram Protocol, UDP) message.

For example, after receiving the TCP message, the network device transmits an acknowledgement (ACK) corresponding to the TCP message. For another example, after receiving the UDP message, the network device transmits an acknowledgement (ACK) corresponding to the UDP message. If the terminal does not receive the ACK message, the terminal may retransmit the TCP message or the UDP message to the network device all the time. As a result, it takes long time to establish a call or a calling party fails, which reduces a user experience.

### SUMMARY

This application provides a call establishment method and apparatus, so as to avoid the following problem: The terminal retransmits a TCP message or a UDP message all the time. As a result, it takes long time to establish a call or a calling party fails, which reduces a user experience.

According to a first aspect, this application provides a call establishment method, applied to a terminal, where a first wireless network belongs to a first domain; a first communication link is established between the terminal and a first network device in the first wireless network; and the method includes: transmitting a first message to the first network device through the first communication link, where the first message is used for requesting to establish a first call; retransmitting the first message to the first network device through the first communication link if an acknowledgement message of the first message transmitted by the first network device is not received on the first communication link within first preset time after transmitting the first message; performing, by the terminal, a reset operation in a case that the retransmission of the first message meets a first preset condition and the terminal does not receive, on the first communication link when the retransmission of the first message meets the first preset condition, the acknowledgment message of the first message transmitted by the first network device, where the reset operation includes resetting the connection of the first communication link and establishing a second communication link between the terminal and the first network device; transmitting a second message to the first network device through the second communication link, where the second message is used for requesting to establish a first call; retransmitting the second message to the first network device through the first communication link if an acknowledgement message of the second message transmitted by the first network device is not received on the second communication link within second preset time after transmitting the second message; performing, by the terminal, a domain switching operation if the retransmission of the second message meets a second preset condition and the terminal does not receive, on the second communication link when the retransmission of the second message meets the second preset condition, the acknowledgement message of the second message transmitted by the first network device, to perform switching from the first domain in which the terminal is currently located to a second domain, and transmitting, in the second domain, a third message for requesting to establish a first call to a second network device in a second wireless network, to establish the first call in the second domain, where a standard of the first wireless network is higher than a standard of the second wireless network; and the second wireless network belongs to the second domain. Therefore, the terminal establishes the second communication link with the first network device through the reset operation, and attempts to establish the first call through the second message on the second communication link. If the retransmission of the second message meets the second preset condition and the terminal does not receive, on the second communication link when the retransmission of the second message meets the second preset condition, the acknowledgment message of the second message transmitted by the first network device, the terminal performs the domain switching operation, and continues to establish the first call in the second domain that is switched to, thus improving a success rate of call establishment by different attempts, reducing a duration of call establishment, and enhancing a user experience.

In a possible implementation, a type of the second communication link is the same as a type of the first communication link, and a type of the second message is the same as a type of the first message; or a type of the second communication link is different from a type of the first communication link, and a type of the second message is different from a type of the first message. Regardless of whether the type of the second communication link is the same as the type of the first communication link, in a case that the retransmission of the first message meets the first preset condition and the terminal does not receive, on the first communication link when the retransmission of the first message meets the first preset condition, the acknowledgment message of the first message transmitted by the first network device, the terminal can reestablish a new communication link by the reset operation. A probability that the new communication link is normal is relatively large, and a probability of successful message interactions can be increased, thereby increasing the success rate of call establishment and reducing the duration of call establishment.

In a possible implementation, a type of the second communication link is different from a type of the first communication link, and a type of the second message is different from a type of the first message, which includes: a type of one of the first communication link and the second communication link is a transmission control protocol (TCP) communication link, and a type of the other one of the first communication link and the second communication link is a user datagram protocol (UDP) communication link; a type of one of the first message and the second message is a TCP message, and a type of the other one of the first message and the second message is a UDP message; and a protocol corresponding to the first communication link is the same as a protocol corresponding to the first message; and a protocol corresponding to the second communication link is the same as a protocol corresponding to the second message. For example, the TCP message may be TCP [PSH, ACK], and an acknowledgement message of the TCP message may be TCP [ACK]. The UDP message may be UDP [PSH, ACK], and an acknowledgement message of the UDP message may be UDP [ACK]. Thus, the terminal may establish another type of communication link when one type of communication link is abnormal, to increase and improve the possibility of successful message interactions.

In a possible implementation, a type of the second communication link is the same as a type of the first communication link, and a type of the second message is the same as a type of the first message, which includes: the types of both the first communication link and the second communication link are TCP communication links or UDP communication links; the types of both the first message and the second message are TCP messages or UDP messages; and a protocol corresponding to the first communication link is the same as a protocol corresponding to the first message; and a protocol corresponding to the second communication link is the same as a protocol corresponding to the second message.

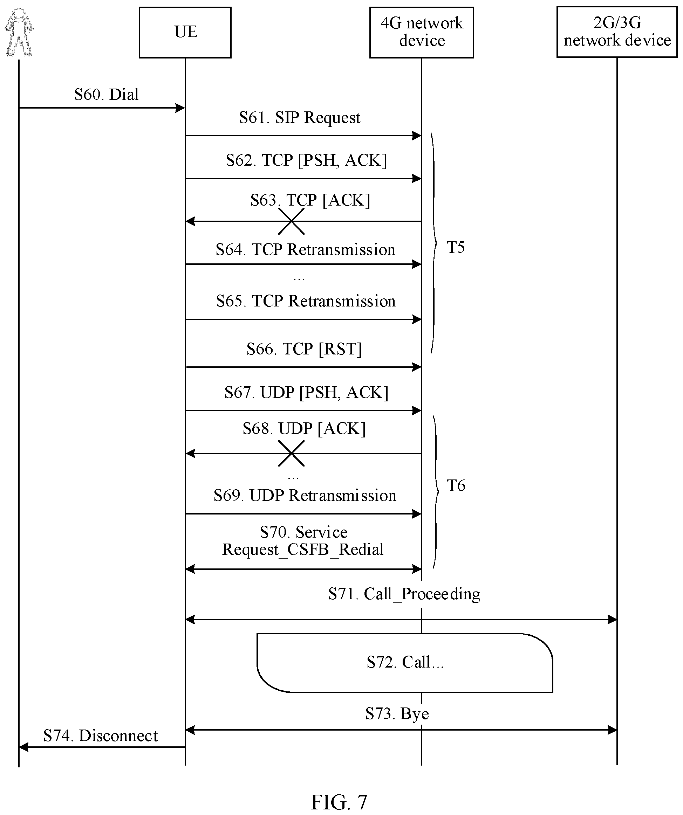

In a possible implementation, the first preset condition includes preset first retransmission time, and the preset first retransmission time is used for indicating a maximum duration for which the first message is transmitted on the first communication link; or the first preset condition includes a preset first number of retransmissions, and the preset first number of retransmissions is used for indicating a maximum number of transmissions of the first message on the first communication link. The first retransmission time may start from a moment at which the terminal transmits the first message for the first time, as shown by T6 in FIG. 7. In some examples, the first retransmission time may start from a moment at which the terminal transmits the first message for the second time, and transmitting the first message for the second time means starting to retransmit the first message. In some examples, the first retransmission time may start from a moment at which the terminal generates a first call request (e.g. an SIP Request), and the first call request is encapsulated in the first message, as shown by T5 in FIG. 7. The first retransmission time is not limited in this application. The first number of retransmissions may be N, and N may be greater than 2. For example, N=3. A starting point of calculation and a specific value of the first number of retransmissions are not limited. For example, the first number of retransmissions is calculated from the moment of transmitting the first message for the first time. For another example, the first number of retransmissions is calculated from the moment of transmitting the first message for the second time. It should be noted that, starting means that the terminal starts to count the time. The counting of the time ends after the counted time is the first retransmission time, so that the terminal controls the transmission of the first message by using the first retransmission time.

In a possible implementation, the second preset condition includes preset second retransmission time, and the preset second retransmission time is used for indicating a maximum duration for which the second message is transmitted on the second communication link; or the second preset condition includes a preset second number of retransmissions, and the preset second number of retransmissions is used for indicating a maximum number of transmissions of the second message on the second communication link.

In a possible implementation, the preset first retransmission time is less than a first duration, and/or the preset second retransmission time is less than the first duration. The first duration is a duration that is specified in a standard protocol and lasts from a moment at which the terminal starts to transmit the first message or the second message to the first network device to a moment at which the terminal receives a reset message transmitted by the first network device, and the reset message is used for triggering the terminal to perform the reset operation. Therefore, the terminal can attempt in advance to perform, before receiving the reset message transmitted by the first network device, an operation (such as the reset operation or the domain switching operation) for improving a call abnormality, and can find out and improve an abnormality as early as possible, so that the call can be normally established, thereby shortening the call establishment duration, improving the success rate of call establishment, and enhancing the user experience.

In a possible implementation, the preset first retransmission time is six seconds, and/or the preset second retransmission time is six seconds.

In a possible implementation, the method further includes at least one of the following: the first wireless network is a 4G wireless network or a 5G wireless network; the second wireless network is a 3G or 2G wireless network; the first domain is a packet switching (PS) domain; the second domain is circuit switching (CS) domain; the first message is any TCP message or any UDP message in a call establishment process of an IP multimedia system (IMS); the second message is any TCP message or any UDP message in a call establishment process of an IMS; or the third message is a request message in a CS call establishment process. For example, the call establishment of the IMS may be VoNR call establishment or VoLTE call establishment; and the CS call establishment means that the CS domain establishes a call.

In a possible implementation, the method further includes: the first wireless network is a 5G wireless network; the second wireless network is a 4G wireless network; the first domain is a domain corresponding to the 5G wireless network; and the second domain is a domain corresponding to the 4G wireless network. Therefore, the terminal can fall from the domain corresponding to the 5G wireless network back to the domain corresponding to the 4G wireless network, and establish the first call on the domain corresponding to the 4G wireless network, thereby establishing the first call by using the 4G wireless network. Furthermore, the network performance of the 4G wireless network is good, so that the call quality of the first call can be ensured.

In a possible implementation, the method further includes: performing, by the terminal, the domain switching operation again if the terminal does not establish the first call in the second domain within third preset time, to perform switching from the second domain in which the terminal is currently located to a third domain, and transmitting, in the third domain, a fourth message to a third network device in a third wireless network, where the fourth message is used for requesting to establish the first call in the third domain; the standard of the second wireless network is higher than a standard of the third wireless network; and the third wireless network belongs to the third domain. That the terminal does not establish the first call in the second domain within the third preset time means that the terminal does not successfully establish the first call in the second domain within the third preset time (for example, the terminal is still in a calling state within the third preset time). Then, the terminal may perform the domain switching operation again to fall back to the lower third domain, and attempt to establish the first call on the third domain. By the attempt to establish the first call successfully by performing domain switching again, to find out and improve an abnormality as early as possible, the call can be established normally, thereby shortening the call establishment duration, improving the success rate of call establishment, and enhancing the user experience.

In a possible implementation, the method further includes at least one of the following: the third wireless network is a 3G or 2G wireless network; the third domain is circuit switching (CS) domain; the first message and the second message are any TCP messages or any UDP messages in a call establishment process in the 5G wireless network; the third message is a request message in a call establishment process in the 4G wireless network; or the fourth message is a request message in CS call establishment process.

According to a second aspect, this application provides a call establishment method, applied to a terminal, where a third wireless network belongs to a third domain; a third communication link is established between the terminal and a network device in the third wireless network; and the method includes: transmitting a fourth message to the network device in the third wireless network through the third communication link, where the fourth message is used for requesting to establish a second call; retransmitting the fourth message to the network device in the third wireless network through the third communication link if an acknowledgement message of the fourth message transmitted by the network device in the third wireless network is not received; and performing a domain switching operation if the retransmission of the fourth message meets a preset condition and the terminal does not receive, on the third communication link when the retransmission of the fourth message meets the preset condition, the acknowledgment message of the fourth message transmitted by the network device in the third wireless network, and establishing the second call on a domain switched to.

In a possible implementation, performing a domain switching operation includes: performing switching from the third domain to a fifth domain, where a standard of the third wireless network is higher than a standard of a fifth wireless network belonging to the fifth domain.

In a possible implementation, performing a domain switching operation includes: performing switching from the third domain to a fourth domain, where a standard of the third wireless network is higher than a standard of a fourth wireless network belonging to the fifth domain; and
performing switching from the fourth domain to a fifth domain if establishing, on the fourth domain, the second call with a network device in the fourth wireless network fails, where the standard of the fourth wireless network is higher than a standard of the fifth wireless network.

In a possible implementation, the third wireless network is a 5G wireless network; the fourth wireless network is a 4G wireless network, and the fifth wireless network is a 3G or a 2G wireless network; the third domain is a 5G domain; the fourth domain is a 4G domain, and the fifth domain is a circuit switching (CS) domain; and the fourth message is any TCP message or any UDP message in a call establishment process of an IMS.

In a possible implementation, the preset condition includes preset retransmission time, and the preset retransmission time is used for indicating a maximum duration for which the fourth message is transmitted on the third communication link; or the preset condition includes a preset number of retransmissions, and the preset number of retransmissions is used for indicating a maximum number of transmissions of the fourth message on the third communication link.

In a possible implementation, the preset retransmission time is less than a first duration; the first duration is a duration that is specified in a standard protocol and lasts from a moment at which the terminal starts to transmit the fourth message to the network device to a moment at which the terminal receives a reset message transmitted by the network device; and the reset message is used for triggering the terminal to perform the reset operation.

In a possible implementation, the preset retransmission time is six seconds.

According to a third aspect, this application provides a terminal, including: one or more processors and a memory, where the memory is configured to store computer program code; the computer program code includes computer instructions; and when the one or more processors execute the computer instructions, the terminal performs any method described above.

According to a fourth aspect, this application provides a computer-readable storage medium, configured to store a computer program. The computer program, when run, is specifically configured to implement any method described above.

According to a fifth aspect, this application provides a chip. When the chip is deployed in a terminal, the chip is configured to control the terminal to implement any method described above.

### BRIEF DESCRIPTION OF DRAWINGS

FIG. 1 is a schematic diagram of establishing a call according to this application;
FIG. 2 is a signaling diagram of signaling interaction between a UE and a 4G network device according to this application;
FIG. 3 is another signaling diagram of signaling interaction between a UE and a 4G network device according to this application;
FIG. 4 is a schematic diagram of transmission of a message on layers according to this application;
FIG. 5 is a signaling diagram of a call establishment method according to this application;
FIG. 6 is another signaling diagram of a call establishment method according to this application;
FIG. 7 is still another signaling diagram of a call establishment method according to this application;
FIG. 8 is yet another signaling diagram of a call establishment method according to this application;
FIG. 9 is yet still another signaling diagram of a call establishment method according to this application; and
FIG. 10 is a structural diagram of hardware of a terminal according to this application.

### DESCRIPTION OF EMBODIMENTS

The following clearly and completely describes technical solutions in embodiments of this application with reference to the accompanying drawings in the embodiments of this application. Terms used in the following embodiments are only intended to describe particular embodiments, and are not intended to limit this application. As used in this specification and the claims of this application, a singular expression form, "one", "a", "the", "foregoing", "the", or "this", is intended to also include an expression form such as "one or more", unless clearly indicated to the contrary in the context. It should be further understood that in the embodiments of this application, "one or more" means one, two, or more. The term "and/or" describes an association relationship between associated objects and represents that three relationships may exist. For example, A and/or B may represent: Only A exists, both A and B exist, and only B exists. A and B may be singular or plural. The character "/" in this specification generally indicates an "or" relationship between associated objects.

Reference of "an embodiment", "some embodiments", or the like described in this specification means that a specific feature, structure, or characteristic described with reference to the embodiment is included in one or more embodiments of this application. Therefore, statements "in an embodiment", "in some embodiments", "in some other embodiments", "in still some other embodiments", and the like appearing in different parts of this specification do not necessarily refer to the same embodiment, but mean "one or more but not all embodiments", unless otherwise specifically emphasized. The terms "include", "contain", "have", and variations thereof all mean "including but not limited to", unless otherwise specifically emphasized.

"A plurality of" involved in the embodiments of this application means being greater than or equal to two. It should be noted that, in the descriptions of the embodiments of this application, the terms such as "first" and "second" are merely used for a purpose of distinguishing descriptions and are neither intended to indicate or imply relative importance nor intended to indicate or imply a sequence.

For ease of explanation, terms in embodiments of this application are first explained:
A wireless communication system may be understood as including a terminal and a network device. The terminal may alternatively be referred to as terminal equipment, a user equipment, a mobile station, a mobile terminal, and the like. The terminal device may be a mobile phone, a tablet computer (pad), a computer with a wireless transceiver function, a virtual reality terminal device, an augmented reality terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, or the like. This application imposes no limitation on a specific technology and a specific device form used by the terminal.

The network device may be a base station (base station), an evolved NodeB (eNodeB), a transmissionreception point (TRP), a next generation NodeB (gNB) in a 5G mobile communication system, a base station in a future mobile communication system, an access node in a WiFi system, or the like. Alternatively, the network device may be a module or unit that completes some functions of a base station, for example, may be a central unit (CU) or may be a distributed unit (DU). This application imposes no limitation on a specific technology and a specific device form used by the network device.

The wireless communication system includes, but is not limited to: a global system of mobile communication (GSM) system, a code division multiple access (CDMA) system, a wideband code division multiple access (WCDMA) system, a long term evolution (LTE) system, an LTE frequency division duplex (FDD), an LTE time division duplex (TDD) system, a universal mobile telecommunication system (UMTS), and a fifth generation mobile communication system (5G).

The GSM system may alternatively be referred to as a second generation communications system, i.e. 2G. The CDMA system and the WCDMA system may alternatively be referred to as a third generation communication system, i.e. 3G. The LTE system, the LTE TDD system, and the like may alternatively be referred to as a fourth generation communication system, i.e. 4G.

High standard and low standard: The following sequence is obtained by sequencing according to development orders of network standards: 2G, 3G, 4G, and 5G. The high standard and the low standard are any two standards among all network standards in the sequence. A front standard in this sequence is a high standard of a rear standard, and the rear standard is a low standard of the front standard. For example, 5G is the high standard of 2G, 3G, and 4G; 3G is the high standard of 2G; and 3G is a low standard of 4G. The network standard is a standard of a wireless network.

A high-definition voice call in the 4G wireless network may be a voice over long-term evolution (VoLTE) call, namely, the VoLTE call is a high-definition call performed using the 4G wireless network. A high-definition voice call in the 5G wireless network may be a voice over new radio (VoNR) call, namely, the VoNR call is a high-definition call performed using the 5G wireless network. In a process that the terminal establishes a call (e.g. the VoLTE call or the VoNR call), the terminal may transmit data to a network device through a TCP or UDP message on an established communication link, for example, transmit data to the network device through TCP [PSH, ACK] or UDP [PSH, ACK]. The network device transmits an ACK message to the terminal after receiving the TCP [PSH, ACK] or the UDP [PSH, ACK]. PSH represents that there is data (DATA) transmission.

If the terminal does not receive the ACK message, the terminal retransmits the TCP [PSH, ACK] or the UDP [PSH, ACK] to the network device. The retransmission means that the terminal continues to transmit the TCP [PSH, ACK] or the UDP [PSH, ACK] to the network device. As a result, it takes long time to establish a call or a calling party fails, which reduces a user experience.

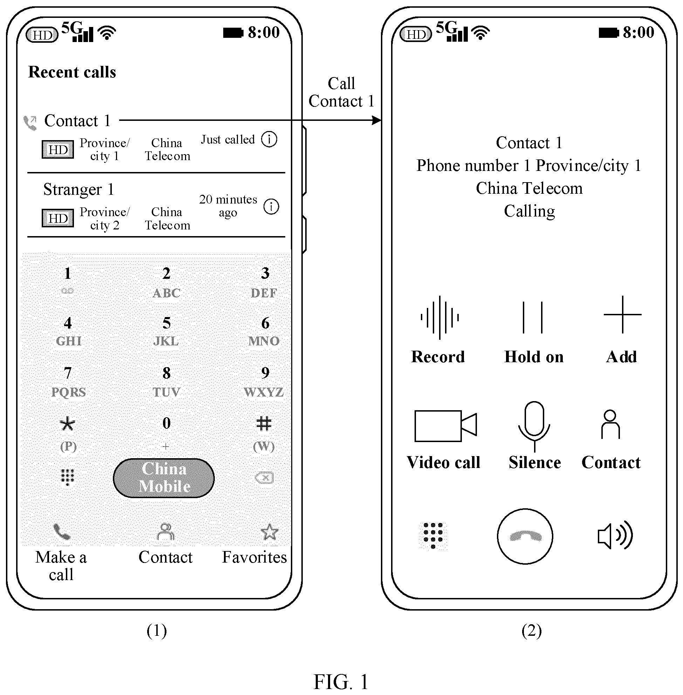

The VoLTE call is taken as an example. FIG. 1 shows an example of a failure of establishing the VoLTE call. The terminal turns on a VoLTE call function: A user taps a phone application on the terminal. The terminal opens the phone application, and FIG. 1(1) shows an interface of the phone application. The user may make a call using the interface shown in FIG. 1(1) to start to establish a VoLTE call. For example, the user may select a phone number from contacts on the interface shown in FIG. 1(1) or type a phone number. After the user taps and dials, a calling interface shown in FIG. 1(2) is shown, starting to establish the VoLTE call. If the terminal does not receive an ACK message transmitted by the network device in the process of establishing the VoLTE call, the terminal continues displaying the calling interface to indicate that the call continues being in a calling state.

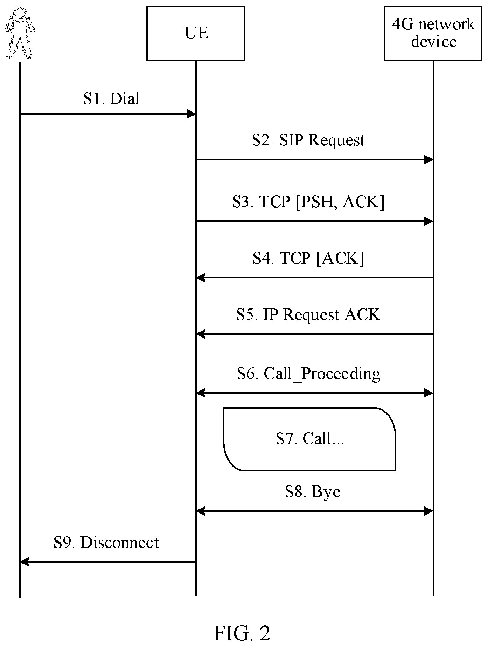

A process of a signaling interaction between the terminal and a 4G network device is shown in FIG. 2 in a scenario that the terminal establishes the VoLTE call. In FIG. 2, a UE serves as the terminal, and the UE is a calling party. A TCP link is established between the UE and the 4G network device. The process of the signaling interface may include the following steps:
S1. The UE receives a dial request from a user.
S2. The UE transmits a session initialization protocol (SIP) request message to the 4G network device. The SIP request message is SIP Request for short, to indicate through the SIP Request that the UE serving as a calling party initiates call establishment. The SIP Request may include at least one of the following messages: Invite, Update, the provisional response acknowledge (Prack), etc. Invite means inviting a called party to make a call; Update is used for changing call parameters without changing a call state; Prack is a mechanism for ensuring reliable transmission of a temporary messages (101-199) in the SIP message, such as simulating a reliability response of 200OK and acknowledging receipt of 183 call in progress/180 ringing.
S3. The UE transmits a TCP [PSH, ACK] to the 4G network devices to request to establish a call through the TCP [PSH, ACK].

The TCP message for reaction between the UE and the 4G network device includes a FLAGS field, and the FLAGS field can use the following identifications: SYNchronous (SYN), FINish (FIN), ACKnowledgment (ACK), PuSH (PSH), ReSeT (RST), etc. SYN: It represents establishing a connection. FIN: It indicates closing the connection. ACK: It indicates that the message requires a response from a receiving party. PSH: It indicates that there is DATA transmission. RST: It represents connection resetting, which means resets the connection of an existing communication link and reestablishing a new communication link. This embodiment of this application can aim at PSH and ACK.

It should be noted that, a person skilled in the art can understand that step S2 and step S3 can be understood as follows: The UE first generates an SIP Request. Then, the UE encapsulates the SIP Request into a message (such as: a TCP [PSH, ACK] message). Then, the UE transmits the message (this message may be encapsulated in another message and is finally transmitted to the 4G network device) to the 4G network device, thereby transmitting the SIP Request to the 4G network device.

S4. The 4G network device transmits a TCP [ACK] to the UE.

S5. The 4G network device transmit an SIP ACK message (referred to as SIP Request ACK) to the UE. The SIP Request ACK message is an acknowledgement message from the 4G network device for the SIP Request transmitted by the UE.

S6. The UE interacts with the 4G network device through a Call_Proceeding message, to indicate, through the Call_Proceeding message, that the call made by the user is received and starts to be processed to establish the call with a called party.

S7. The UE calls the called party through the 4G network device.

S8. The UE interacts with the 4G network device through a Bye (which indicates disconnecting the session) message, to instruct, through the Bye message, the call between the UE and the called party to be disconnected.

S9. The UE disconnects the call made by the user.

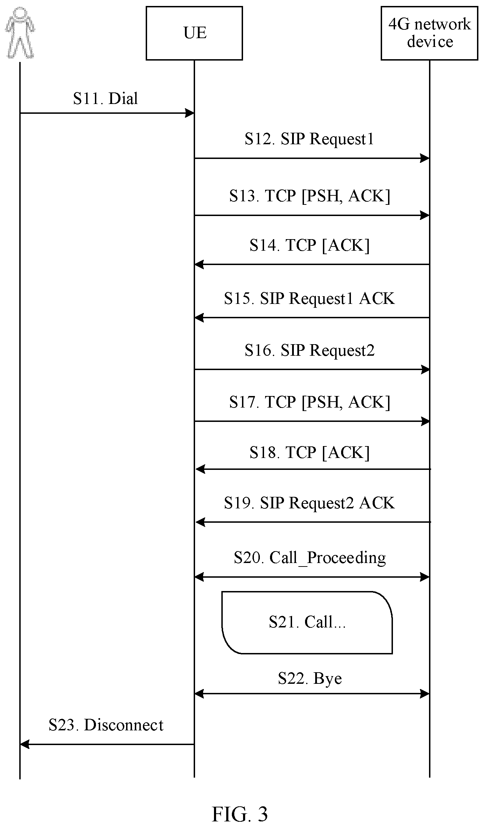

Through FIG. 2 above, the UE serving as the calling party has completed call establishment, call, and call disconnection. If a UDP link is established between the UE and the 4G network device, the UE transmits a UDP [PSH, ACK] to the 4G network device in step S3, and the 4G network device transmits a UDP [ACK] to the UE in step S4. Whether it is Invite, Update, Prack, etc., when the UE transmits these messages, these messages can be encapsulated in the SIP Request for interaction with the 4G network device in the manner shown in FIG. 2 above. As shown in FIG. 3, the following steps may be included:

S11. A UE receives a dial request from a user.

S12. The UE transmits an SIP Request1 to a 4G network device. The SIP Request1 is an SIP request message, and the SIP Request1 may include one of the following messages: Invite, Update, Prack, etc. For example, the SIP Request1 may include Invite.

S13. The UE transmits a TCP [PSH, ACK] to the 4G network device.

It should be noted that, a person skilled in the art can understand that step S12 and step S13 can be understood as follows: The UE first generates an SIP Request1. Then, the UE encapsulates the SIP Request1 into a message (such as: a TCP [PSH, ACK] message). Then, the UE transmits the message (this message may be encapsulated in another message and is finally transmitted to the 4G network device) to the 4G network device, thereby transmitting the SIP Request1 to the 4G network device.

S14. The 4G network device transmits a TCP [ACK] to the UE.

S15. The 4G network device transmits an SIP Request1 ACK to the UE. The SIP Request1 ACK is an acknowledgement message from the 4G network device for the SIP Request1 transmitted by the UE.

S16. The UE transmits an SIP Request2 to the 4G network device. The SIP Request2 is a SIP request message, and messages included in the SIP Request2 are different from those included in the SIP Request1. For example, the SIP Request1 may include Invite, and the SIP Request2 may include Update or Prack.

S17. The UE transmits the TCP [PSH, ACK] to the 4G network device.

It should be noted that, a person skilled in the art can understand that step S16 and step S17 can be understood as follows: The UE first generates an SIP Request2. Then, the UE encapsulates the SIP Reques2 into a message (such as: a TCP [PSH, ACK] message). Then, the UE transmits the message (this message may be encapsulated in another message and is finally transmitted to the 4G network device) to the 4G network device, thereby transmitting the SIP Request2 to the 4G network device.

S18. The 4G network device transmits a TCP [ACK] to the UE.

S19. The 4G network device transmits an SIP Request2 ACK to the UE. The SIP Request2 ACK is an acknowledgement message from the 4G network device for the SIP Request2 transmitted by the UE.

In this embodiment of this application, the TCP [PSH, ACK] in step S13 is used for indicating that there is the transmission of the SIP Request1, and the TCP [ACK] in step S14 is an acknowledgement of the TCP [PSH, ACK] in step S13. The TCP [PSH, ACK] in step S17 is used for indicating that there is the transmission of the SIP Request2, and the TCP [ACK] in step S18 is an acknowledgement of the TCP [PSH, ACK] in step S17. Although the TCP [PSH, ACK] and the TCP [ACK] are used in the two methods, the TCPs [PSH, ACK] transmitted twice by the UE are different, for example, they have different serial numbers. The TCPs [ACK] transmitted twice by the 4G network device are different, for example, they have different serial numbers.

S20. The UE interacts with the 4G network device through a Call_Proceeding message, to indicate, through the Call_Proceeding message, that the call made by the user is received and starts to be processed to establish the call with the called party.

S21. The UE calls the called party through the 4G network device.

S22. The UE interacts with the 4G network device through a Bye message, to indicate, through the Bye message, that the call between the UE and the called party.

S23. The UE disconnects the call made by the user.

In a VoNR call establishment scenario, a process of a signaling interaction between the UE and the 4G network device can be the same as the process of the signaling interaction between the UE and the 4G network device in the VoLTE call establishment scenario mentioned above, which will not be elaborated here.

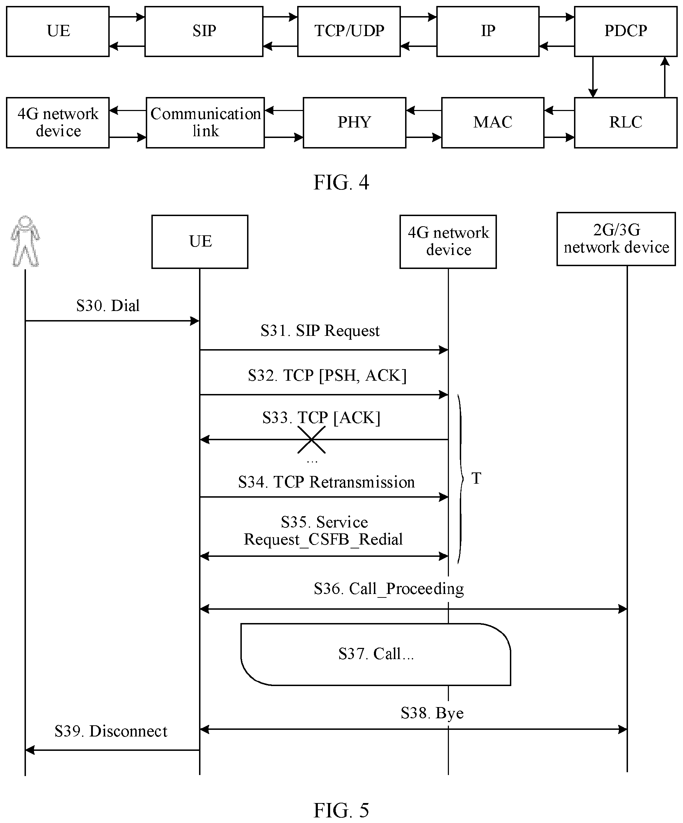

When the UE interacts with the 4G network devices through the SIP request message related to the call, the SIP request message may be encapsulated in the TCP message. For example, the SIP Request is encapsulated in the TCP [PSH, ACK], and is transmitted to the 4G network device through the TCP [PSH, ACK]. Furthermore, the TCP [PSH, ACK] can be encapsulated in another message for being transmitted. FIG. 4 shows transmission of a message on layers during message interaction between the UE and the 4G network device.

The messages, such as Invite, Update, and Prack, which are transmitted by the UE and related to the call are encapsulated in the SIP Request on an SIP layer. The SIP Request is encapsulated in the TCP [PSH, ACK] or the UDP [PSH, ACK] on a TCP/UDP layer. The TCP [PSH, ACK] or the UDP [PSH, ACK] is transmitted to an Internet protocol (IP) layer that is the next layer of the TCP/UDP layer, is encapsulated in the IP layer, a packet data convergence protocol (PDCP) layer, a radio link control (RLC) layer, a media access control address (MAC) layer, and a physical (PHY) layer in sequence, and is then transmitted to a communication link between the UE and the 4G network device through the PHY layer. The 4G network device may receive the message transmitted by the UE through the communication link. The messages, such as Invite, Update, and Prack, which are related to the call are encapsulated and transmitted layer by layer, which indicates that the message received by the 4G network device carries the messages, such as Invite, Update, and Prack, which are related to the call, so that the 4G network device can receive the messages related to the call.

After receiving the messages related to the call, the 4G network device makes a response to these messages by, such as, transmitting ACK messages. The ACK messages transmitted by the 4G network device are transmitted to the UE through the communication link, the PHY layer, the MAC layer, the RLC layer, the PDCP layer, the IP layer, the TCP/UDP layer, and the SIP layer in sequence. The ACK message at the TCP/UDP layer is the TCP [ACK] or the UDP [ACK], and the ACK message at the SIP layer is the SIP Request ACK. The ACK messages at other layers will not be elaborated one by one.

After the TCP [PSH, ACK] or UDP [PSH, ACK] is transmitted at the TCP/UDP layer of the UE, although at least one of the PHY layer, the MAC layer, the RLC layer, the PDCP layer, and the IP layer receives the ACK message, if the TCP/UDP layer does not receive the TCP [ACK] or the UDP [ACK], the UE may retransmit the TCP [PSH, ACK] or the UDP [PSH, ACK], and the TCP [PSH, ACK] or the UDP [PSH, ACK] transmitted at each time is distinguished by the serial number.

The UE can retransmit the TCP [PSH, ACK] or the [PSH, ACK] on the communication link established with the 4G network device, and the retransmission time is long. For example, the retransmission may last for more than 160 seconds (s). At the stage that the UE retransmits the TCP [PSH, ACK] or the UDP [PSH, ACK], the UE can remain in a calling state, as shown in FIG. 1(2), and remain in a calling interface. As a result, it takes long time to establish a call or the calling party fails, which reduces the user experience. A process of establishing a VoNR call between the UE and a 5G network device is similar to the process of establishing the VoLTE call mentioned above, but there is also the following problem: It takes long time to establish a call or the calling party fails, which reduces the user experience.

After the UE retransmits the TCP [PSH, ACK] or the UDP [PSH, ACK] for a period of time, the 4G/5G network device (referred to as a network device) monitors that the UE keeps retransmitting messages. The network device may transmit an RST message to the UE, such as TCP [RST], indicating, through the RST message, that the communication link between the UE and the network device is abnormal. Based on the RST message, the UE may determine that the communication link is abnormal, reestablish a new communication link, and continue to transmit a message to the network device through the new communication link. Since the UE reestablishes the new communication link after the UE retransmits the messages for a period of time and receives the RST message transmitted by the network device, it is difficult for the UE to find out that the communication link is abnormal in a timely manner, which also causes the problem that it takes long time to establish a call, which reduces the user experience.

To solve the above problems, an embodiment of this application provides a call establishment method, in which, a UE controls message retransmission. When the message retransmission meets a preset condition, the UE actively performs at least one operation of resetting, link switching, and domain switching, to improve an abnormality of a call. Namely, the call establishment method provided in this embodiment of this application is mainly implemented through the following three modes:
1) The message retransmission is controlled, involving controlling the retransmission time or a number of retransmissions. The retransmission time or the number of retransmissions may be specified in a preset condition. The retransmission time is used for indicating a maximum duration for which a message is transmitted on a communication link. The number of retransmissions is used for indicating a maximum number of transmissions of a message on a communication link.
   If a time interval for the message retransmission is known, the number of retransmissions of a message within a period of time may be calculated based on the time interval for the message retransmission and current retransmission time. Therefore, the retransmission time is specified in the preset condition, which is equivalent to specifying the number of retransmissions. In some examples, the UE controls the message retransmission in 2n seconds, namely, the message is retransmitted once at 20, 21, 22, .... The time interval for the message retransmission is known, from which, the UE may calculate the number of retransmissions within a period of time. In some examples, the UE may retransmit the message at equal intervals, such as every one second. Thus, the UE may calculate the number of retransmissions within a period of time. In some examples, the retransmission time is less than a duration from a moment at which the UE starts to retransmit the message to a moment the UE receives the RST message transmitted by the network device. In some examples, if the retransmission time is six seconds, when the UE controls the message retransmission in 2n seconds, it is equivalent to the number of retransmissions being three. In some examples, if the retransmission time for the UE to retransmit the TCP [PSH, ACK] or the UDP [PSH, ACK] is 160 seconds or 120 seconds, the retransmission time in the preset condition is less than 120 seconds.
2) When the message retransmission meets the preset condition and the RST message is not received on the communication link when the preset condition is met, the UE actively performs a reset operation. During the reset operation, a link switching operation may or may not be performed.
3) When the message retransmission meets the preset condition, the UE actively performs a domain switching operation.

A VoLTE call scenario or a VoNR call scenario is taken as an example. The call establishment method provided in this embodiment of this application is mainly implemented through the following three modes:
1) Retransmission of the TCP [PSH, ACK] or the UDP [PSH, ACK] is controlled. In some examples, the retransmission time of the TCP [PSH, ACK] or the UDP [PSH, ACK] is controlled. The retransmission time may alternatively be referred to as a message transmission no response timeout period. For example, the message transmission no response timeout period is six seconds. The retransmission time is a preset duration. Specifically, the retransmission time is a maximum duration spent by the UE in continuously transmitting the TCP [PSH, ACK] or the UDP [PSH, ACK].
   In the process of establishing a call, the UE uses the retransmission time to count the time when the UE transmits the TCP [PSH, ACK] or the UDP [PSH, ACK]. In some examples, the UE starts to count the time from an M^{th} transmission of the TCP [PSH, ACK] or the UDP [PSH, ACK], and ends counting the time after the counted duration is equal to a value of the retransmission time. During the time counting process, the UE does not interrupt the transmission of the TCP [PSH, ACK] or the UDP [PSH, ACK], where the value of M may be 1 or 2. If the transmission of the TCP [PSH, ACK] or the UDP [PSH, ACK] by the UE is interrupted, the time for the UE will be restored to 0. When the UE retransmits the TCP [PSH, ACK] or the [PSH, ACK], the UE may start to count the time again from 0.
2) If no response is made after the TCP [PSH, ACK] or the UDP [PSH, ACK] is transmitted for T1 seconds, the UE actively performs a reset operation and then transmits the UDP [PSH, ACK] or the TCP [PSH, ACK]. In some examples, during the reset operation, the UE dismantles a TCP communication link and reestablishes a UDP communication link. The UE completes a link switching operation during the reset operation, and transmits the UDP [PSH, ACK] on the UDP communication link. In some examples, during the reset operation, the UE resets the connection of a UDP communication link and reestablishes a TCP communication link. The UE completes a link switching operation during the reset operation, and transmits the TCP [PSH, ACK] on the TCP communication link. In some examples, during the reset operation, the UE resets a TCP communication link and reestablishes a TCP communication link. In some examples, during the reset operation, the UE resets a UDP communication link and reestablishes a UDP communication link.
   T1 is time spent by the UE in transmitting the TCP [PSH, ACK] or the UDP [PSH, ACK] before performing the reset operation. This time may start from an M^{th} transmitted TCP [PSH, ACK] or UDP [PSH, ACK] after the UE receives the dial request of the user, and end after the counted duration is equal to the value of the retransmission time, so that T1 is equal to the retransmission time. The value of M may be 1 or 2. For example, if preset retransmission time is six seconds, the time may start from a moment at which the UE transmits a first TCP [PSH, ACK] or UDP [PSH, ACK] after the UE receives the dial request of the user, and a starting time point is used as starting time of T1. The time ends after six seconds, and an ending time point can be used as ending time of T1. Thus, T1=six seconds.
3) If no response is made after the TCP [PSH, ACK] or the UDP [PSH, ACK] is transmitted for T2 seconds, the UE actively performs a domain switching operation. The domain switching operation may be circuit switched fallback, falling back from a packet switching (PS) domain to a circuit switching (CS) domain. T1 and T2 may be the same or different.

T2 is the time spent by the UE in transmitting the TCP [PSH, ACK] or UDP [PSH, ACK] before the UE performs the domain switching operation. If the UE does not perform the reset operation before actively performing the domain switching operation, T2 may start a moment at which the UE transmits the TCP [PSH, ACK] or UDP [PSH, ACK] for the M^{th} time after the UE receives the dial request of the user and end after the counted duration is equal to the preset retransmission time. If the UE performs the reset operation before actively performing the domain switching operation, T2 starts from a moment at which the UE transmits the TCP [PSH, ACK] or UDP [PSH, ACK] for the M^{th} time after the UE performs the reset operation, and ends after the counted duration is equal to the value of the retransmission time. The value of M may be 1 or 2.

The UE may combine the above three modes, including: a combination of 1) and 2), a combination of 1) and 3), and a combination of 1), 2), and 3), but more attentions will be paid to the combination of 1), 2), and 3): Since the CS domain is a circuit switching domain, the TCP/UDP is not applicable to the CS domain. After the UE falls back to the CS domain, the UE cannot perform the reset operation and cannot complete the link switching operation during the reset operation. For a scenario where the UE falls back from the PS domain to the CS domain after performing domain switching, 2) is executed before 3). The above combination modes enable the UE to attempt at least one operation for improving a call abnormality in the process of actively controlling the message retransmission, to eliminate abnormalities that occur during the call establishment by attempting different types of operations. This enables the UE to establish a call normally, thereby shortening the call establishment duration, improving the success rate of call establishment, and enhancing the user experience.

Furthermore, the UE can actively control the message retransmission. When it is determined that the message retransmission meets the preset condition and the RST message is not received on the communication link when the preset condition is met, the UE can actively attempt the operation for improving the call abnormality. Therefore, before receiving the RST message transmitted by the network device, the UE can attempt the operation for improving the call abnormality in advance. This can find out and improve the abnormality as early as possible, so that the call can be established normally, thereby shortening the call establishment duration, improving the success rate of call establishment, and enhancing the user experience.

The VoLTE call scenario or the VoNR call scenario is still taken as an example. The call establishment method provided in this embodiment of this application will be explained below in conjunction with the accompanying drawings. FIG. 5 shows a flow of the call establishment method, which may include the following steps:
S30. A UE receives a dial request from a user.
S31. The UE transmits an SIP Request to a 4G network device.
S32. The UE transmits a TCP [PSH, ACK] to the 4G network device. For the understanding of step S31 and step S32, refer to the explanations of step S2 and step S3, which will not be elaborated here.
S33. After transmitting the TCP [PSH, ACK], the UE does not receive a TCP [ACK] transmitted by the 4G network device. For example, the TCP [ACK] is not received within first preset time of transmitting the TCP [PSH, ACK]. A value of the first preset time is not limited.
S34. The UE retransmits the TCP [PSH, ACK] to the 4G network device. A serial number of the retransmitted TCP [PSH, ACK] is different from a serial number of the TCP [PSH, ACK] transmitted in step S32. In step S34, TCP Retransmission is used for indicating retransmitting the TCP [PSH, ACK].

In some examples, retransmission time may start from a moment at which the UE transmits the SIP Request to the 4G network device, as shown by T in FIG. 5. The SIP Request is encapsulated in the TCP [PSH, ACK] for being transmitted. The TCP [PSH, ACK] transmitted for the first time is transmitted after the SIP Request, so the TCP [PSH, ACK] retransmitted during the retransmission time includes the TCP [PSH, ACK] transmitted for the first time. It should be noted that, transmitting the SIP Request means that the UE generates the SIP Request, encapsulates it into the TCP [PSH, ACK], and transmits the TCP [PSH, ACK]. It can be understood that: T in FIG. 5 represents time spent by the UE in continuously transmitting the TCP [PSH, ACK] after receiving the dial request of the user. The time T starts from a moment at which the UE generates the SIP Request, and ends after the counted duration is equal to the value of the retransmission time. Therefore, a value of T is equal to preset retransmission time. After the time the UE transmits the TCP [PSH, ACK] reaches the preset retransmission time, the UE can execute step S35 to perform a domain switching operation. The transmission of the TCP [PSH, ACK] is interrupted; the UE falls back from a PS domain to a CS domain, and the time for the TCP [PSH, ACK] is restored to 0.

In some examples, the retransmission time may be from a moment at which the UE transmits the TCP [PSH, ACK] for the first time. Namely, in some examples, T in FIG. 5 represents the time spent by the UE in continuously transmitting the TCP [PSH, ACK] after receiving the dial request of the user. This time may start from a first TCP [PSH, ACK] transmitted after the UE receives the dial request of the user, and end after the counted duration is equal to the value of the retransmission time. Thus, a value of T is equal to preset retransmission time. After the time the UE transmits the TCP [PSH, ACK] reaches the preset retransmission time, the UE can execute step S35 to perform a domain switching operation. The transmission of the TCP [PSH, ACK] is interrupted; the UE falls back from a PS domain to a CS domain, and the time for the TCP [PSH, ACK] is restored to 0. The purpose of restoring the time for the TCP [PSH, ACK] to 0 is to start to count the time from 0 for next transmission of the TCP [PSH, ACK].

The duration from the moment at which the UE generates the SIP Request to the moment at which the UE encapsulates the SIP Request into the TCP [PSH, ACK] is in milliseconds, so the retransmission time starting from the moment at which UE transmits the TCP [PSH, ACK] for the first time is close to the retransmission time starting from the moment at which the UE transmits the SIP Request.

S35. The UE interacts with the 4G network device through a Service Request_CSFB_Redial message (which is a service request indicating falling back to a CS domain). The Service Request_CSFB_Redial message indicates that the UE has performed the domain switching operation and falls back from the PS domain to the CS domain (referred to as CS_Retry). The domain switching operation is performed when the TCP [PSH, ACK] meets a condition (such as the requirement for the retransmission time or the number of retransmissions mentioned above) and the TCP [ACK] is not received on a communication link when the condition is met.

S36: The UE interacts with a 2G/3G network device through a Call_Proceeding message.

S37. The UE calls a called party through the 2G/3G network device.

S38: The UE interacts with the 2G/3G network device through a Bye message.

S39. The UE disconnects the call made by the user.

The UE falls back from the PS domain to the CS domain through the Service Request_CSFB_Redial message, indicating that the UE has switched from a high-standard network to a low-standard network. After switching to the low-standard network, the UE may initiate establishment of a call in the low-standard network. However, when the UE switches from the high-standard network to the low-standard network, the probability that the UE successfully establishes a call increases. Therefore, when the UE falls back to the CS domain, the call establishment duration is shortened; the success rate of call establishment is improved; and the user experience is enhanced.

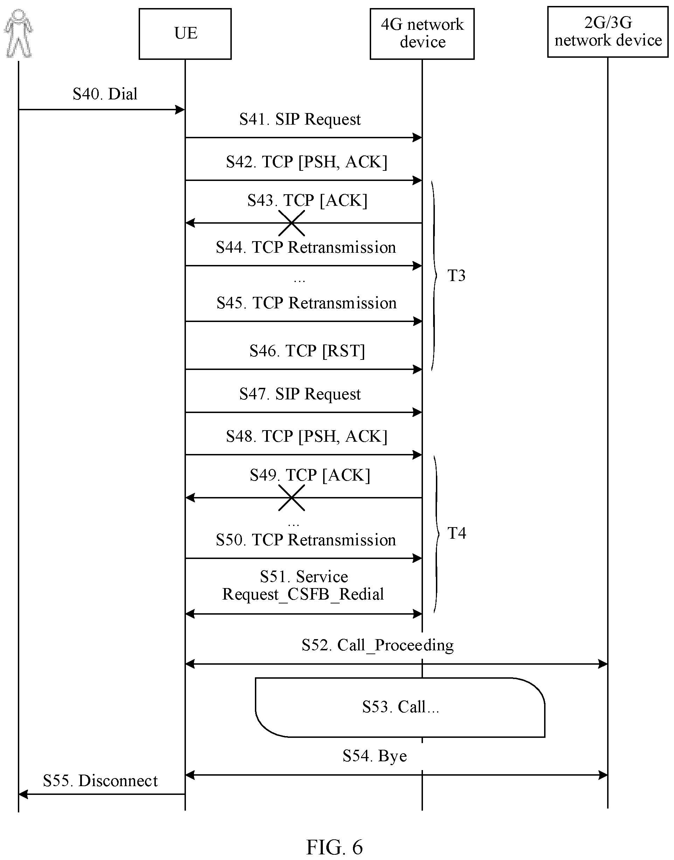

FIG. 6 shows another flow of the call establishment method, which may include the following steps:
S40. A UE receives a dial request from a user.
S41. The UE transmits an SIP Request to a 4G network device.
S42. The UE transmits a TCP [PSH, ACK] to the 4G network device. For the understanding of step S41 and step S42, refer to the explanations of step S2 and step S3, which will not be elaborated here.
S43. After transmitting the TCP [PSH, ACK], the UE does not receive a TCP [ACK] transmitted by the 4G network device.
S44. The UE retransmits the TCP [PSH, ACK] to the 4G network device. A serial number of the retransmitted TCP [PSH, ACK] is different from a serial number of the TCP [PSH, ACK] transmitted in step S42. In step S44, TCP Retransmission is used for indicating retransmitting the TCP [PSH, ACK].
S45. The UE continues retransmitting the TCP [PSH, ACK] to the 4G network device. A serial number of the retransmitted TCP [PSH, ACK] is different from a serial number of the TCP [PSH, ACK] transmitted in step S42 and a serial number of the TCP [PSH, ACK] transmitted in step S44. In step S45, TCP Retransmission is used for indicating retransmitting the TCP [PSH, ACK].

In some examples, retransmission time may start from a moment at which the UE transmits the SIP Request to the 4G network device, as shown by T3 in FIG. 6. T3 may be the same as or different from T in FIG. 5 above. The SIP Request is encapsulated in the TCP [PSH, ACK] for being transmitted. The TCP [PSH, ACK] transmitted for the first time is transmitted after the SIP Request, so the TCP [PSH, ACK] retransmitted during the retransmission time includes the TCP [PSH, ACK] transmitted for the first time. It should be noted that, transmitting the SIP Request means that the UE generates the SIP Request, encapsulates it into the TCP [PSH, ACK], and transmits the TCP [PSH, ACK]. It can be understood that: T3 in FIG. 6 represents time spent by the UE in continuously transmitting the TCP [PSH, ACK] after receiving the dial request of the user. The time T3 may start from a moment at which the UE generates the SIP Request, and end after the counted duration is equal to the value of the retransmission time. Therefore, a value of T3 is equal to preset retransmission time. After the time the UE transmits the TCP [PSH, ACK] reaches the preset retransmission time, the UE can execute step S46 to perform a reset operation. In this case, the transmission of the TCP [PSH, ACK] is interrupted, and the time for the TCP [PSH, ACK] is restored to 0.

In some examples, the retransmission time may start from a moment at which the UE transmits the TCP [PSH, ACK] for the first time. Then, after the time at which the UE transmits the message reaches the retransmission time, the UE transmits a TCP [RST] to the 4G network device. This embodiment will not be described in conjunction with the accompanying drawings. Namely, T3 in FIG. 6 represents the time spent by the UE in continuously transmitting the TCP [PSH, ACK] after receiving the dial request of the user. This time T3 may start from a first TCP [PSH, ACK] transmitted after the UE receives the dial request of the user, and end after the counted duration is equal to the value of the retransmission time. Thus, a value of T3 is equal to preset retransmission time. After the time the UE transmits the TCP [PSH, ACK] reaches the preset retransmission time, the UE can execute step S46 to perform a reset operation. In this case, the transmission of the TCP [PSH, ACK] is interrupted, and the time for the TCP [PSH, ACK] is restored to 0.

S46. The UE transmits a TCP [RST] to the 4G network device.

The TCP [RST] indicates that the UE has performed the reset operation. The reset operation resets the connection of the TCP communication link established between the UE and the 4G network device and reestablishes a new communication link. The new communication link may be a new TCP communication link, to transmit the SIP Request, the TCP [PSH, ACK], etc. on the new communication link, so that in a case that the new TCP communication link can transmit a message normally, the UE and the 4G network device can successfully interact with each other through messages involved in the call establishment, and the probability that the UE successfully establishes a call increases. The reset operation is performed when the TCP [PSH, ACK] meets a condition (such as the requirement for the retransmission time or the number of retransmissions mentioned above) and the TCP [ACK] is not received on a communication link when the condition is met.

S47. The UE transmits an SIP Request to a 4G network device.

S48. The UE transmits a TCP [PSH, ACK] to the 4G network device. After the UE reestablishes the new communication link, the UE continues transmitting the TCP [PSH, ACK] on the communication link, to request to establish a call. Step S48 and step S42 above are used for requesting to establish the same call. For the understanding of step S47 and step S48, refer to the explanations of step S2 and step S3, and details will not be elaborated here.

S49. After transmitting the TCP [PSH, ACK], the UE does not receive a TCP [ACK] transmitted by the 4G network device. For example, the TCP [ACK] is not received within second preset time of transmitting the TCP [PSH, ACK]. A value of the second preset time is not limited.

S50. The UE retransmits the TCP [PSH, ACK] to the 4G network device. A serial number of the retransmitted TCP [PSH, ACK] is different from a serial number of the TCP [PSH, ACK] transmitted in the above step. In step S50, TCP Retransmission is used for indicating retransmitting the TCP [PSH, ACK].

From step S47 to step S50, the UE interacts with the 4G network device by using the new TCP communication link. For example, the UE retransmits the SIP Request, and re-encapsulates the SIP Request in the TCP [PSH, ACK]. On the new TCP communication link, the retransmission time may continue to start from the moment of transmitting the SIP Request in step S47, as shown by T4 in FIG. 6. It should be noted that, transmitting the SIP Request means that the UE generates the SIP Request, encapsulates it into the TCP [PSH, ACK], and then transmits TCP [PSH, ACK]. T4 in FIG. 6 represents time spent by the UE in continuously transmitting the TCP [PSH, ACK] after the UE makes a response to the TCP [RST]. The time T4 may start from a moment at which the UE makes a response to the TCP[RST] and generates the SIP Request, and end after the counted duration is equal to the value of the retransmission time. Therefore, a value of T4 is equal to preset retransmission time. After the time the UE transmits the TCP [PSH, ACK] reaches the preset retransmission time, the UE can execute step S51 to perform a domain switching operation. The transmission of the TCP [PSH, ACK] is interrupted; the UE falls back from a PS domain to a CS domain, and the time for the TCP [PSH, ACK] is restored to 0.

In some examples, T4 in FIG. 6 represents the time spent by the UE in continuously transmitting the TCP [PSH, ACK] after making a response to the TCP [RST]. This time may start from a first TCP [PSH, ACK] transmitted after the UE makes a response to the TCP [RST], and end after the counted duration is equal to the value of the retransmission time. Thus, a value of T4 is equal to preset retransmission time. After the time the UE transmits the TCP [PSH, ACK] reaches the preset retransmission time, the UE can execute step S51 to perform a domain switching operation. The transmission of the TCP [PSH, ACK] is interrupted; the UE falls back from a PS domain to a CS domain, and the time for the TCP [PSH, ACK] is restored to 0.

In this embodiment, the purpose of restoring the time for the TCP [PSH, ACK] to 0 is to start to count the time from 0 for next transmission of the TCP [PSH, ACK]. T4 and T3 may be the same or different. If T4 and T3 are different, numbers of retransmissions of the TCP [PSH, ACK] by the UE on the new and old TCP communication links may be different.

S51. The UE interacts with the 4G network device through a Service Request_CSFB_Redial message. The Service Request_CSFB_Redial message indicates that the UE has performed the domain switching operation and falls back from the PS domain to the CS domain.

S52: The UE interacts with a 2G/3G network device through a Call_Proceeding message.

S53. The UE calls a called party through the 2G/3G network device.

S54: The UE interacts with the 2G/3G network device through a Bye message.

S55. The UE disconnects the call made by the user.

In FIG. 6 above, after retransmitting the TCP [PSH, ACK] for a period of time (e.g. T3), the UE actively transmits the TCP [RST] and reestablishes a new TCP communication link through the TCP [RST]. If the TCP communication link recovers from its failure during the reestablishment, the reestablished new TCP communication link is a normal communication link, and messages can be successfully exchanged between the UE and the 4G network device on this new TCP communication link, which increases the probability that the UE successfully establishes a call. If the new TCP communication link still fails, the UE may perform CSFB, fall back from the PS domain to the CS domain, and establish a call on the CS domain, thus improving the success rate of call establishment through different types of attempts. Furthermore, time from the moment at which the UE receives the dial request to the moment at which the UE completes the domain switching operation is relatively short, which can shorten the call establishment duration. For example, if the retransmission time is shorter than or equal to six seconds, a sum of two retransmission times is shorter than or equal to 12 seconds. The duration of the reset and domain switching operations is also short. Compared with the retransmission time of 120 seconds, the call establishment duration is shortened.

FIG. 7 shows still another flow of the call establishment method, which may include the following steps:
S60. A UE receives a dial request from a user.
S61. The UE transmits an SIP Request to a 4G network device.
S62. The UE transmits a TCP [PSH, ACK] to the 4G network device. For the understanding of step S61 and step S62, refer to the explanations of step S2 and step S3, which will not be elaborated here.
S63. After transmitting the TCP [PSH, ACK], the UE does not receive a TCP [ACK] transmitted by the 4G network device.
S64. The UE retransmits the TCP [PSH, ACK] to the 4G network device. A serial number of the retransmitted TCP [PSH, ACK] is different from a serial number of the TCP [PSH, ACK] transmitted in step S42. In step S44, TCP Retransmission is used for indicating retransmitting the TCP [PSH, ACK].
S65. The UE continues to retransmit the TCP [PSH, ACK] to the 4G network device.

In this embodiment, retransmission time may start from a moment at which the UE transmits the SIP Request to the 4G network device, as shown by T5 in FIG. 7. T5 may be the same as or different from T3 in FIG. 6 above. In some examples, the retransmission time may start from a moment at which the UE transmits the TCP [PSH, ACK] for the first time. Namely, T5 in FIG. 7 may start (be counted) from the moment at which the UE transmits the TCP [PSH, ACK] for the first time. Then, after the time at which the UE transmits the message reaches the retransmission time, the UE transmits a TCP [RST] to the 4G network device. This embodiment will not be described in conjunction with the accompanying drawings. For the explanation of T5, refer to the explanation of T3 above, and details will not be elaborated here.

S66. The UE transmits a TCP [RST] to the 4G network device.

In this embodiment, the TCP [RST] indicates that the UE has performed the reset operation. The reset operation resets the connection of the TCP communication link established between the UE and the 4G network device and reestablishes a new communication link. The new communication link may be a new UDP communication link. Link switching is completed during resetting, to transmit the UDP [PSH, ACK], etc. on the UDP communication link, so that in a case that the TCP communication link fails, but the UDP communication link can transmit a message normally, the UE and the 4G network device can successfully interact with each other through messages involved in the call establishment, and the probability that the UE successfully establishes a call increases.

S67. The UE transmits a UDP [PSH, ACK] to the 4G network devices, to request to establish the above call through UDP [PSH, ACK].

It should be noted that, a person skilled in the art can understand that step S67 can be understood as follows: The UE encapsulates the generated SIP Request into a message (such as: a UDP [PSH, ACK] message). Then, the UE transmits the message (this message may be encapsulated in another message and is finally transmitted to the 4G network device) to the 4G network device, thereby transmitting the SIP Request to the 4G network device and continuing requesting to establish the above call through the UDP [PSH, ACK].

S68. After transmitting the UDP [PSH, ACK], the UE does not receive a UDP [ACK] transmitted by the 4G network device. For example, the UDP [ACK] is not received within second preset time of transmitting the UDP [PSH, ACK]. A value of the second preset time is not limited.

S69. The UE retransmits the UDP [PSH, ACK] to the 4G network device. A serial number of the retransmitted UDP [PSH, ACK] is different from a serial number of the UDP [PSH, ACK] transmitted in the above step. In step S69, UDP Retransmission is used for indicating retransmitting the UDP [PSH, ACK].

In some examples, after a UDP communication link is established, the retransmission time may start from a moment at which the UE transmits the UDP [PSH, ACK], as shown by T6 in FIG. 7. It should be noted that, transmitting the SIP Request means that the UE generates the SIP Request, encapsulates it into the UDP [PSH, ACK], and transmits the UDP [PSH, ACK]. T6 in FIG. 7 represents time spent by the UE in continuously transmitting the UDP [PSH, ACK] after making a response to the TCP [RST]. This time may start from a moment after the UE makes a response to the TCP [RST] and generates the SIP Request, and end after the counted duration is equal to the value of the retransmission time. Therefore, a value of T6 is equal to preset retransmission time. After the time the UE transmits the UDP [PSH, ACK] reaches the preset retransmission time, the UE can execute step S70 to perform a domain switching operation. The transmission of the UDP [PSH, ACK] is interrupted; the UE falls back from a PS domain to a CS domain, and the time for the UDP [PSH, ACK] is restored to 0.

In some examples, after the UDP communication link is established, the UE may continue transmitting the SIP Request and start to calculate the retransmission time from the time of transmitting the SIP Request. It should be noted that, T6 in FIG. 7 represents the time spent by the UE in continuously transmitting the UDP [PSH, ACK] after making a response to the TCP [RST]. This time may start from a first UDP [PSH, ACK] transmitted after the UE makes a response to the TCP [RST], and end after the counted duration is equal to the value of the retransmission time. Thus, a value of T6 is equal to preset retransmission time. After the time the UE transmits the UDP [PSH, ACK] reaches the preset retransmission time, the UE can execute step S70 to perform a domain switching operation. The transmission of the UDP [PSH, ACK] is interrupted; the UE falls back from a PS domain to a CS domain, and the time for the UDP [PSH, ACK] is restored to 0. The purpose of restoring the time for the UDP [PSH, ACK] to 0 is to start to count the time from 0 for next transmission of the UDP [PSH, ACK].

The retransmission time on the UDP communication link may be the same or different from the retransmission time on the TCP communication link.

S70. The UE interacts with the 4G network device through a Service Request_CSFB_Redial message. The Service Request_CSFB_Redial message indicates that the UE has performed the domain switching operation and falls back from the PS domain to the CS domain.

S71: The UE interacts with a 2G/3G network device through a Call_Proceeding message.

S72. The UE calls a called party through the 2G/3G network device.

S73: The UE interacts with the 2G/3G network device through a Bye message.

S74. The UE disconnects the call made by the user.

In FIG. 7 above, after retransmitting the TCP [PSH, ACK] for a period of time (e.g. T5), the UE actively transmits the TCP [RST] and reestablishes a new UDP communication link through the TCP [RST]. In this way, even if the TCP communication link still fails, the UE can successfully interact with the 4G network device by messages through a UDP communication link that is possibly normal, which increases the probability that the UE successfully establishes a call. If the UDP communication link still fails, the UE may perform CSFB, fall back from the PS domain to the CS domain, and establish a call on the CS domain, thus improving the success rate of call establishment through different types of attempts. Furthermore, the duration from the moment at which the UE receives the dial request to the moment at which the UE completes the domain switching operation is short, which can shorten the cell establishment duration.

In the above embodiment, the UE can directly fall back from the PS domain (for example, both 5G and 4G belong to the PS domain) to the CS domain, without distinguishing between 5G and 4G. In some examples of VoNR call establishment, during the domain switching operation, the UE can first fall back from a 5G domain to a 4G domain, and then fall back from the 4G domain to the CS domain. It can be understood that in this embodiment of this application, if both a 5G wireless network and a 4G wireless network correspond to the PS domain, when the UE establishes a call through the 4G network device, the UE can interact with the 4G network device by the Service Request_CSFB_Redial message and fall back from the PS domain to the CS domain. When establishing a call through the 5G network device, the UE can interact with the 5G network device by the Service Request_CSFB_Redial message and fall back from the PS domain to the CS domain.

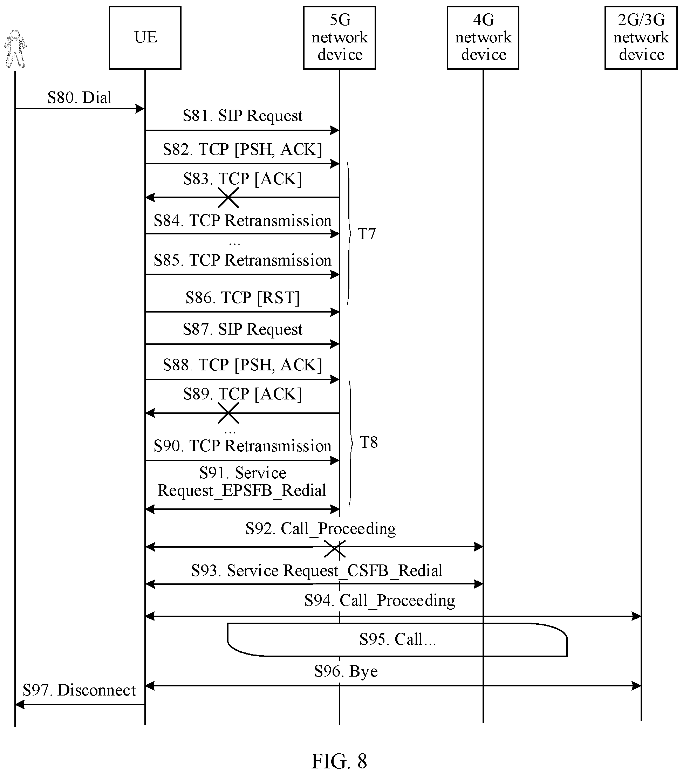

If the 5G wireless network and the 4G wireless network correspond to different domains, when establishing a call through the 5G network device, the UE can first fall back from the domain corresponding to the 5G wireless network to the domain corresponding to the 4G wireless network and attempt to establish a call through the 4G network device. If the UE still cannot establish the call through the 4G network device, the UE will fall back from the domain corresponding to the 4G wireless network to the CS domain. This flow is shown in FIG. 8 and may include the following steps:
S80. A UE receives a dial request from a user.
S81. The UE transmits an SIP Request to a 5G network device.
S82. The UE transmits a TCP [PSH, ACK] to the 5G network device.
S83. After transmitting the TCP [PSH, ACK], the UE does not receive a TCP [ACK] transmitted by the 5G network device.
S84. The UE retransmits the TCP [PSH, ACK] to the 5G network device.
S85. The UE continues to retransmit the TCP [PSH, ACK] to the network device.

In some examples, retransmission time starts from a moment at which the UE transmits the SIP Request to the 5G network device, as shown by T7 in FIG. 8. T7 may be the same as or different from T3 in FIG. 6 above. The SIP Request is encapsulated in the TCP [PSH, ACK] for being transmitted. The TCP [PSH, ACK] transmitted for the first time is transmitted after the SIP Request, so the TCP [PSH, ACK] retransmitted during the retransmission time includes the TCP [PSH, ACK] transmitted for the first time. In some examples, the retransmission time may start from a moment at which the UE transmits the TCP [PSH, ACK] for the first time. Then, after the time at which the UE transmits the message reaches the retransmission time, the UE transmits a TCP [RST] to the 5G network device. This embodiment will not be described in conjunction with the accompanying drawings. For the explanation of T7, refer to the explanation of T3 above, and details will not be elaborated here.

S86. The UE transmits a TCP [RST] to the 5G network device. The TCP [RST] is used for resetting the connection of a TCP communication link established between the UE and the 5G network device, and a new TCP communication link is reestablished. In some examples, the TCP [RST] is used for resetting the connection of a TCP communication link established between the UE and the 5G network device, and a new UDP communication link is reestablished. The UE may transmit a UDP [PSH, ACK] on the UDP communication link, which will not be explained in conjunction with the accompanying drawings.

S87. The UE transmits an SIP Request to the 5G network device.

S88. The UE transmits a TCP [PSH, ACK] to the 5G network device.

S89. After transmitting the TCP [PSH, ACK], the UE does not receive a TCP [ACK] transmitted by the 5G network device.

S90. The UE retransmits the TCP [PSH, ACK] to the 5G network device. The UE interacts with the 5G network device by using the new TCP communication link. For example, the UE retransmits the SIP Request, and re-encapsulates the SIP Request in the TCP [PSH, ACK]. On the new TCP communication link, the retransmission time may continue to start from the moment of transmitting the SIP Request in step S87, as shown by T8 in FIG. 8. For the explanation of T8, refer to the explanation of T4 above, and details will not be elaborated here.

T8 and T7 may be the same or different. If T8 and T7 are different, numbers of retransmissions of the TCP [PSH, ACK] by the UE on the new and old TCP communication links may be different.

S91. The UE interacts with the 5G network device through a Service Request_EPSFB _Redial message (which is a service request indicating falling back to a 4G domain). The Service Request_EPSFB _Redial message indicates that the UE has performed the domain switching operation and falls back from a 5G domain to a 4G domain. The 5G domain may be a domain corresponding to a 5G wireless network, and the 4G domain may be a domain corresponding to a 4G wireless network.

S92: The UE fails in interaction with a 4G network device through a Call_Proceeding message. It can be understood that: failing in interaction through a Call_Proceeding message means that the UE does not completes establishment of a call through the 4G network device within a period of time. This period of time may be third preset time.

S93. The UE interacts with the 4G network device through a Service Request_CSFB_Redial message. The Service Request_CSFB_Redial message indicates that the UE has performed the domain switching operation again and falls back from the 4G domain to a CS domain.

S94: The UE interacts with a 2G/3G network device through a Call_Proceeding message.

S95. The UE calls a called party through the 2G/3G network device.

S96: The UE interacts with the 2G/3G network device through a Bye message.

S97. The UE disconnects the call made by the user.

According to the method shown in FIG. 8 above, the UE can improve the success rate of call establishment while shortening the call establishment duration.

In some examples, after message retransmission meets a preset condition, the UE may first perform a first reset operation. The first reset operation is used for reestablishing a communication link that is of the same type as the previous communication link, and continue to initiate establishment of a call on this communication link, to continue the interaction with the network device. If the message retransmission on the communication link meets the preset condition after the first reset operation, the UE may perform a second reset operation and complete a link switching operation at the same time after the second reset operation, to reestablish a communication link that is of a different type from the previous communication link, and continue to initiate establishment of a call on this communication link, to continue the interaction with the network device. If the message retransmission on the communication link meets the preset condition after the second reset operation, the UE performs a domain switching operation. This can also shorten the call establishment duration and improve the success rate of call establishment. Namely, the UE can perform the reset operation for multiple times. If a call is still not established after multiple reset operations, the UE performs the domain switching operation. The domain switching operation may be shown in FIG. 7 or FIG. 8. Preset conditions corresponding to different reset operations may be the same or different.

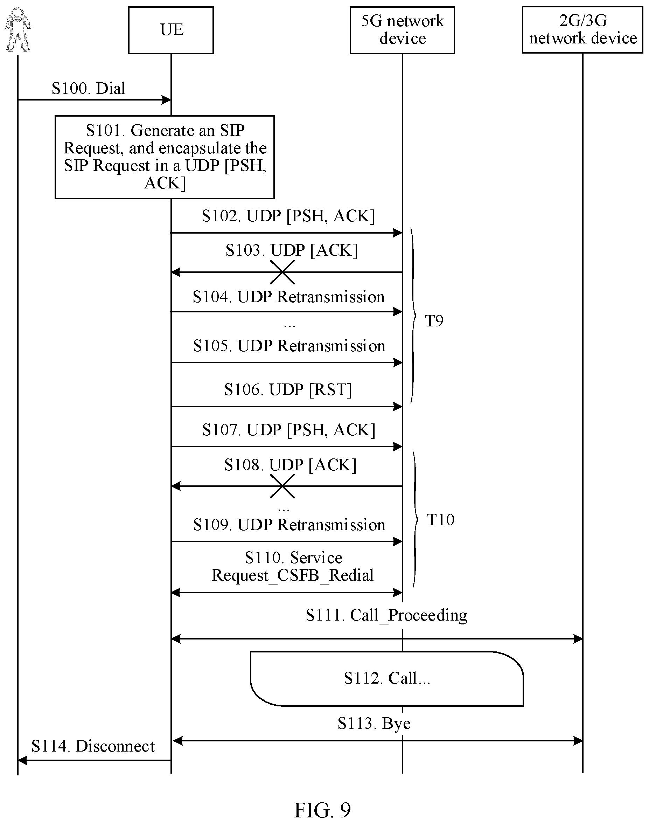

FIG. 9 shows still another flow of the call establishment method, which may include the following steps:
S100. A UE receives a dial request from a user.
S101. The UE generates and transmits an SIP Request, and encapsulates the SIP Request in a UDP [PSH, ACK].
S102. The UE transmits the UDP [PSH, ACK] to a 5G network device.
S103. After transmitting the UDP [PSH, ACK], the UE does not receive a UDP [ACK] transmitted by the 5G network device.
S104. The UE retransmits the UDP [PSH, ACK] to the 5G network device. A serial number of the retransmitted UDP [PSH, ACK] is different from a serial number of the UDP [PSH, ACK] transmitted in step S102. In step S104, UDP Retransmission is used for indicating retransmitting the UDP [PSH, ACK].
S105. The UE continues to retransmit the UDP [PSH, ACK] to the 5G network device.

In this embodiment, the time at which the UE transmits the UDP [PSH, ACK] may be the time spent by the UE in continuously transmitting the UDP [PSH, ACK] after receiving the dial request of the user. This time may start from a first UDP [PSH, ACK] transmitted after the UE receives the dial request of the user, and end after the counted duration is equal to the value of the retransmission time. Thus, the time at which the UE transmits the UDP [PSH, ACK] is equal to preset retransmission time, as shown by T9 in FIG. 9. After the time the UE transmits the UDP [PSH, ACK] reaches the preset retransmission time, the UE may execute step S106 to perform a reset operation. In this case, the transmission of the UDP [PSH, ACK] is interrupted, and the time for the UDP [PSH, ACK] is restored to 0, to count the time from 0 during next transmission of the UDP [PSH, ACK].

S106. The UE transmits a UDP [RST] to the 5G network device.

In this embodiment, the UDP [RST] indicates that the UE has performed the reset operation. The reset operation resets the connection of a UDP communication link between the UE and the 5G network device, and a new UDP communication link is reestablished. If the reestablished UDP communication link can transmit a message normally, the UE and the 5G network device can interact messages involved in call establishment, and the possibility that the UE successfully establishes a call is increased.

S107. The UE transmits a UDP [PSH, ACK] to the 5G network device, to request to establish the above call through UDP [PSH, ACK].

It should be noted that, a person skilled in the art can understand that step S107 can be understood as follows: The UE encapsulates the generated SIP Request into a message (such as: a UDP [PSH, ACK] message). Then, the UE transmits the message (this message may be encapsulated in another message and is finally transmitted to the 5G network device) to the 5G network device, thereby transmitting the SIP Request to the 5G network device and continuing requesting to establish the above call through the UDP [PSH, ACK].

S108. After transmitting the UDP [PSH, ACK], the UE does not receive a UDP [ACK] transmitted by the 5G network device. For example, the UDP [ACK] is not received within second preset time of transmitting the UDP [PSH, ACK]. A value of the second preset time is not limited.

S109. The UE retransmits the UDP [PSH, ACK] to the 5G network device. A serial number of the retransmitted UDP [PSH, ACK] is different from a serial number of the UDP [PSH, ACK] transmitted in the above step. In step S109, UDP Retransmission is used for indicating retransmitting the UDP [PSH, ACK].

In some examples, after a UDP communication link is established, the retransmission time may start from a moment at which the UE transmits the UDP [PSH, ACK], as shown by T10 in FIG. 9. It should be noted that, T10 in FIG. 9 is the time spent by the UE in continuously transmitting the UDP [PSH, ACK] after making a response to the UDP [RST]. This time may start from a first UDP [PSH, ACK] transmitted after the UE makes a response to the UDP [RST], and end after the counted duration is equal to the value of the retransmission time. Thus, T10 may be used as the time at which the UE currently transmits the UDP [PSH, ACK]. A value of T10 is equal to preset retransmission time. After the time the UE transmits the UDP [PSH, ACK] reaches the preset retransmission time, the UE can execute step S110 to perform a domain switching operation. The transmission of the UDP [PSH, ACK] is interrupted; the UE falls back from a PS domain to a CS domain, and the time for the UDP [PSH, ACK] is restored to 0. The purpose of restoring the time for the UDP [PSH, ACK] to 0 is to start to count the time from 0 for next transmission of the UDP [PSH, ACK].

In some examples, after the UDP communication link is established, the UE may continue generating the SIP Request and start to calculate the retransmission time from the time of generating the SIP Request. Namely, T10 in FIG. 9 may start from a moment at which the UE makes a response to the UDP [RST] and generates the SIP Request, and end after the counted duration is equal to the value of the retransmission time. Therefore, a value of T1 0 is equal to preset retransmission time. After the time the UE transmits the UDP [PSH, ACK] reaches the preset retransmission time, the UE can execute step S110 to perform a domain switching operation. The transmission of the UDP [PSH, ACK] is interrupted; the UE falls back from a PS domain to a CS domain, and the time for the UDP [PSH, ACK] is restored to 0.

S110. The UE interacts with the 5G network device through a Service Request_CSFB_Redial message. The Service Request_CSFB_Redial message indicates that the UE has performed the domain switching operation and falls back from the PS domain to the CS domain.

S111: The UE interacts with a 2G/3G network device through a Call_Proceeding message.

S112. The UE calls a called party through the 2G/3G network device.

S113: The UE interacts with the 2G/3G network device through a Bye message.

S114. The UE disconnects the call made by the user.

In FIG. 9 above, after retransmitting the UDP [PSH, ACK] for a period of time (e.g. T9), the UE actively transmits the UDP [RST] and reestablishes a new UDP communication link through the UDP [RST]. In this way, the UE can successfully interact with the 5G network device by messages through a UDP communication link that is possibly normal, which increases the probability that the UE successfully establishes a call. If the UDP communication link still fails, the UE may perform CSFB, fall back from the PS domain to the CS domain, and establish a call on the CS domain, thus improving the success rate of call establishment through different types of attempts. Furthermore, the duration from the moment at which the UE receives the dial request to the moment at which the UE completes the domain switching operation is short, which can shorten the cell establishment duration.

In addition, in some examples, the UE may control whether to perform a reset operation or a domain switching operation by controlling a number of transmissions of the TCP [PSH, ACK] or the UDP [PSH, ACK]. For example, in the signaling diagram of the call establishment method shown in FIG. 5, the UE may start counting from the first transmission of the TCP [PSH, ACK]. A count for the first transmission of the TCP [PSH, ACK] is 1. If the TCP [ACK] is not received, the UE retransmits the TCP [PSH, ACK] (i.e. the second transmission of the TCP [PSH, ACK]), a count for which is 2. If the TCP [ACK] is still not received, the UE continues retransmitting the TCP [PSH, ACK] (i.e. the third transmission of the TCP [PSH, ACK]), a count for which is 3, and so on. When the count reaches a preset number of retransmissions, the UE performs the domain switching operation. After the domain switching operation is triggered, the count of the UE is reset, that is, the count of the UE is restored to 0, so as to start counting from 0 in next transmission of the TCP [PSH, ACK].

For example, in the signaling diagram of the call establishment method shown in FIG. 6, after receiving the dial request, the UE starts to transmit the TCP [PSH, ACK]. The UE may start counting from the first transmission of the TCP [PSH, ACK]. A count for the first transmission of the TCP [PSH, ACK] is 1. If the TCP [ACK] is not received, the UE retransmits the TCP [PSH, ACK] (i.e. the second transmission of the TCP [PSH, ACK]), a count for which is 2. If the TCP [ACK] is still not received, the UE continues retransmitting the TCP [PSH, ACK] (i.e. the third transmission of the TCP [PSH, ACK]), a count for which is 3, and so on. When the count reaches a preset number of retransmissions, the UE performs the reset operation. After the reset operation is triggered, the count of the UE is reset, that is, the count of the UE is restored to 0, so as to start counting from 0 in next transmission of the TCP [PSH, ACK]. After the UE completes the reset operation, the UE starts the transmission of the TCP [PSH, ACK] again. During the first transmission of the TCP [PSH, ACK] after the reset operation, the UE starts counting and has a count of 1. If the TCP [ACK] is not received, the UE retransmits the TCP [PSH, ACK] (i.e. the second transmission of the TCP [PSH, ACK] after the reset operation), a count for which is 2. If the TCP [ACK] is still not received, the UE continues retransmitting the TCP [PSH, ACK] (i.e. the third transmission of the TCP [PSH, ACK] after the reset operation), a count for which is 3, and so on. When the count reaches a preset number of retransmissions, the UE performs the reset operation. After the reset operation is triggered, the count of the UE is reset, that is, the count of the UE is restored to 0, so as to start counting from 0 in next transmission of the TCP [PSH, ACK].

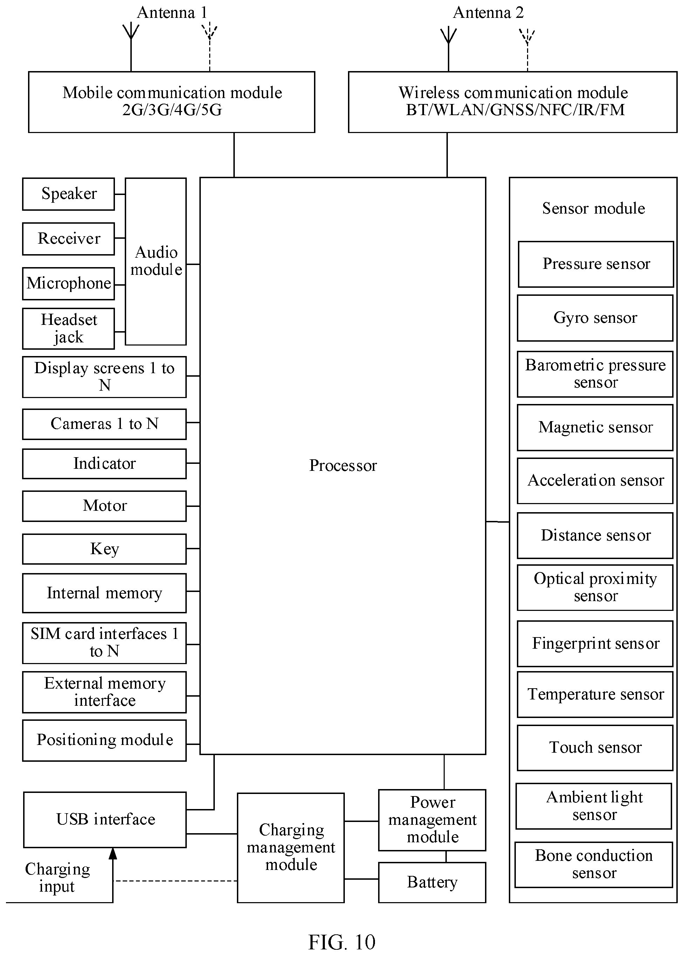

A structure of a terminal for implementing the above call establishment method is shown in FIG. 10, which may include: a processor, an external memory interface, an internal memory, a universal serial bus (USB) interface, a charging management module, a power management module, a battery, an antenna 1, an antenna 2, a mobile communication module, a wireless communication module, a sensor module, a key, a motor, an indicator, a camera, a display screen, a subscriber identification module (SIM) card interface, and the like. An audio module may include a speaker, a receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It can be understood that the structure shown in embodiments of this application does not constitute a specific limitation on the terminal. In some other embodiments, the terminal may include more or fewer components than those shown in the figure, or some components may be combined, or some components may be split, or a different component deployment may be used. The components shown in the figure may be implemented by using hardware, software, or a combination of software and hardware.

The processor may include one or more processing units. For example: The processor may include an application processor (AP), a modem processor, a graphics processing unit (GPU), an image signal processor (ISP), a controller, a video codec, a digital signal processor (DSP), a baseband processor, and/or a neural-network processing unit (NPU). Different processing units may be independent components, or may be integrated into one or more processors. The processor is a nerve center and a command center of the electronic device. The controller may generate an operating control signal based on instruction operation code and a sequence signal, to complete control of fetching and executing instructions.

The external memory interface may be configured to be connected to an external storage card such as a micro SD card, to extend a storage capability of the terminal. The external storage card communicates with the processor by using the external memory interface, to implement a data storage function. The internal memory may be configured to store computer executable program code, and the executable program code includes instructions. The processor executes the instructions stored in the internal memory, to perform various function applications and data processing of the terminal. For example, in this embodiment of this application, the processor executes the instructions stored in the internal memory, to cause the terminal to perform the call establishment method provided in this embodiment of this application.

A wireless communication function of the terminal may be implemented by using the antenna 1, the antenna 2, the mobile communication module, the wireless communication module, the modem processor, the baseband processor, and the like. In some embodiments, the antenna 1 of the terminal is coupled to the mobile communication module, and the antenna 2 is coupled to the wireless communication module, so that the terminal can communicate with a network and another device by using a wireless communication technology. The wireless communication technology may include a global system for mobile communications (GSM), a general packet radio service (GPRS), code division multiple access (CDMA), wideband code division multiple access (WCDMA), time-division code division multiple access (TD-SCDMA), long term evolution (LTE), BT, a GNSS, a WLAN, NFC, FM, an IR technology, and/or the like. The GNSS may include a global positioning system (GPS), a global navigation satellite system (GLONASS), a Beidou navigation satellite system (BDS), a quasizenith satellite system (QZSS), and/or a satellite-based augmentation system (SBAS).

The audio module is configured to convert digital audio information into an analog audio signal output, and is further configured to convert an analog audio input into a digital audio signal. The audio module may further be configured to encode and decode an audio signal. In some embodiments, the audio module may be arranged in the processor, or some function modules in the audio module are arranged in the processor.

The speaker, also referred to as a "horn", is configured to convert an electrical audio signal into a sound signal. The terminal can be used to listen to music or answer a hands-free call by using the speaker.

The receiver, also referred to as a "handset", is configured to convert an audio electrical signal into a sound signal. When the terminal is used to answer a call or speech information, the receiver may be put close to a human ear to answer a voice call.

The microphone, also referred to as a "mic" and a "mike", is configured to convert a sound signal into an electrical signal. When making a call or transmitting speech information, a user may make a sound with the mouth approaching the microphone, to input a sound signal into the microphone. At least one microphone may be arranged in the terminal. In some other embodiments, two microphones may be arranged in the terminal, to collect a sound signal and implement a noise reduction function. In some other embodiments, three, four, or more microphones may be alternatively arranged in the terminal, to collect a sound signal, implement noise reduction, recognize a sound source, achieve a directional recording function, and the like.

The headset jack is configured to be connected to a wired headset. The headset jack may be a USB interface, or may be a 3.5 mm open mobile terminal platform (OMTP) standard interface, or a cellular telecommunications industry association of the USA (CTIA) standard interface.

This application provides a terminal, including: one or more processors and a memory. The memory is configured to store computer program code; the computer program code includes computer instructions; and when the one or more processors execute the computer instructions, the terminal performs the above call establishment method.

This application provides a computer-readable storage medium, configured to store a computer program. The computer program, when run, is specifically configured to implement the above call establishment method.

This application provides a chip. When the chip is deployed in a terminal, the chip is configured to control the terminal to implement the above call establishment method.

## Claims

1. A call establishment method, applied to a terminal, wherein a first wireless network belongs to a first domain; a first communication link is established between the terminal and a first network device in the first wireless network; and the method comprises:
transmitting a first message to the first network device through the first communication link, wherein the first message is used for requesting to establish a first call;
retransmitting, by the terminal, the first message to the first network device through the first communication link if the terminal does not receive, on the first communication link within first preset time after transmitting the first message, a first acknowledgement message transmitted by the first network device, wherein the first acknowledgement message is an acknowledgement message of the first message;
performing, by the terminal, a reset operation if the terminal still does not receive, on the first communication link, the first acknowledgement message when the retransmission of the first message meets a first preset condition, wherein the reset operation comprises resetting the connection of the first communication link and establishing a second communication link between the terminal and the first network device;
transmitting a second message to the first network device through the second communication link, wherein the second message is used for requesting to establish the first call;
retransmitting, by the terminal, the second message to the first network device through the second communication link if the terminal does not receive, on the second communication link within second preset time after transmitting the second message, a second acknowledgement message transmitted by the first network device, wherein the second acknowledgement message is an acknowledgement message of the second message; and
performing, by the terminal, a domain switching operation if the terminal still does not receive, on the second communication link, the second acknowledgement message when the retransmission of the second message meets a second preset condition, to perform switching from the first domain in which the terminal is currently located to a second domain, and transmitting, in the second domain, a third message to a second network device in a second wireless network, wherein the third message is used for requesting to establish the first call in the second domain; a standard of the first wireless network is higher than a standard of the second wireless network; and the second wireless network belongs to the second domain.

2. The method according to claim 1, wherein the first preset condition comprises preset first retransmission time; the preset first retransmission time is used for indicating a maximum duration for which the first message is transmitted on the first communication link; the preset first retransmission time is less than a first duration; the first duration is a duration that is specified in a standard protocol and lasts from a moment at which the terminal starts to transmit the first message to the first network device to a moment at which the terminal receives a reset message transmitted by the first network device; and the reset message is used for triggering the terminal to perform the reset operation;
and/or
the second preset condition comprises preset second retransmission time; the preset second retransmission time is used for indicating a maximum duration for which the second message is transmitted on the second communication link; the preset second retransmission time is less than a second duration; the second duration is a duration that is specified in a standard protocol and lasts from a moment at which the terminal starts to transmit the second message to the first network device to a moment at which the terminal receives a reset message transmitted by the first network device; and the reset message is used for triggering the terminal to perform the reset operation.

3. The method according to claim 1 or 2, wherein the method further comprises:
the first wireless network is a 5G wireless network;
the second wireless network is a 4G wireless network;
the first domain is a domain corresponding to the 5G wireless network; and
the second domain is a domain corresponding to the 4G wireless network.

4. The method according to claim 3, wherein the method further comprises: performing, by the terminal, the domain switching operation again if the terminal does not establish the first call in the second domain within third preset time, to perform switching from the second domain in which the terminal is currently located to a third domain, and transmitting, in the third domain, a fourth message to a third network device in a third wireless network, wherein the fourth message is used for requesting to establish the first call in the third domain; the standard of the second wireless network is higher than a standard of the third wireless network; and the third wireless network belongs to the third domain.

5. The method according to claim 4, wherein the method further comprises at least one of the following:
the third wireless network is a 3G or 2G wireless network;
the third domain is circuit switching (CS) domain;
the first message and the second message are any transmission control protocol (TCP) messages or any user datagram protocol (UDP) messages in a call establishment process in the 5G wireless network;
the third message is a request message in a call establishment process in the 4G wireless network; or
the fourth message is a request message in a circuit switching (CS) call establishment process.

6. The method according to claim 1, wherein a type of the second communication link is the same as a type of the first communication link, and a type of the second message is the same as a type of the first message;
or
a type of the second communication link is different from a type of the first communication link, and a type of the second message is different from a type of the first message.

7. The method according to claim 6, wherein a type of the second communication link is different from a type of the first communication link, and a type of the second message is different from a type of the first message, which comprises:
a type of one of the first communication link and the second communication link is a transmission control protocol (TCP) communication link, and a type of the other one of the first communication link and the second communication link is a user datagram protocol (UDP) communication link;
a type of one of the first message and the second message is a TCP message, and a type of the other one of the first message and the second message is a UDP message; and
a protocol corresponding to the first communication link is the same as a protocol corresponding to the first message; and a protocol corresponding to the second communication link is the same as a protocol corresponding to the second message.

8. The method according to claim 6, wherein a type of the second communication link is the same as a type of the first communication link, and a type of the second message is the same as a type of the first message, which comprises:
the types of both the first communication link and the second communication link are TCP communication links or UDP communication links;
the types of both the first message and the second message are TCP messages or UDP messages; and
a protocol corresponding to the first communication link is the same as a protocol corresponding to the first message; and a protocol corresponding to the second communication link is the same as a protocol corresponding to the second message.

9. The method according to any one of claims 1 to 8, wherein the first preset condition comprises preset first retransmission time, and the preset first retransmission time is used for indicating a maximum duration for which the first message is transmitted on the first communication link;
and/or
the first preset condition comprises a preset first number of retransmissions, and the preset first number of retransmissions is used for indicating a maximum number of transmissions of the first message on the first communication link.

10. The method according to claim 9, wherein the second preset condition comprises preset second retransmission time, and the preset second retransmission time is used for indicating a maximum duration for which the second message is transmitted on the second communication link;
and/or
the second preset condition comprises a preset second number of retransmissions, and the preset second number of retransmissions is used for indicating a maximum number of transmissions of the second message on the second communication link.

11. The method according to claim 10, wherein the preset first retransmission time is six seconds, and/or the preset second retransmission time is six seconds.

12. The method according to any one of claims 1, 2, and 6 to 11, wherein the method further comprises at least one of the following:
the first wireless network is a 4G wireless network or a 5G wireless network;
the second wireless network is a 3G or 2G wireless network;
the first domain is a packet switching (PS) domain;
the second domain is circuit switching (CS) domain;
the first message is any TCP message or any UDP message in a call establishment process of an IP multimedia system (IMS);
the second message is any TCP message or any UDP message in a call establishment process of an IMS; or
the third message is a request message in a CS call establishment process.

13. A terminal, comprising:
one or more processors and a memory, wherein
the memory is configured to store computer program code; the computer program code comprises computer instructions; and when the one or more processors execute the computer instructions, the terminal performs the call establishment method according to any one of claims 1 to 12.

14. A chip, wherein when the chip is deployed in a terminal, the chip is configured to control the terminal to implement the method according to any one of claims 1 to 12.
